(19) **Europäisches Patentamt**
**European Patent Office**
**Office européen des brevets**

(11) **EP 2 266 011 B1**

(12) **FASCICULE DE BREVET EUROPEEN**

(45) Date de publication et mention
de la délivrance du brevet:
**09.05.2018 Bulletin 2018/19**

(21) Numéro de dépôt: **09733105.2**

(22) Date de dépôt: **15.04.2009**

(51) Int Cl.:
***G06F 1/32*** (2006.01)

(86) Numéro de dépôt international:
**PCT/EP2009/054442**

(87) Numéro de publication internationale:
**WO 2009/127646 (22.10.2009 Gazette 2009/43)**

(54) **PROCEDE DE GESTION DE LA CONSOMMATION D'ENERGIE POUR LES SYSTEMES MULTIPROCESSEURS**

VERFAHREN ZUR VERWALTUNG DES LEISTUNGSVERBRAUCHS FÜR MEHRPROZESSORSYSTEME

METHOD FOR MANAGING POWER CONSUMPTION FOR MULTIPROCESSOR SYSTEMS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **18.04.2008 FR 0802171**

(43) Date de publication de la demande:
**29.12.2010 Bulletin 2010/52**

(73) Titulaire: **Commissariat à l'Énergie Atomique et aux Énergies Alternatives 75015 Paris (FR)**

(72) Inventeurs:
• **THABET, Farhat**
**F-91190 Gif sur Yvette (FR)**
• **BEN CHEHIDA, Karim**
**F-92330 Sceaux (FR)**
• **BLANC, Frédéric**
**F-91400 Orsay (FR)**

(74) Mandataire: **Lucas, Laurent Jacques et al Marks & Clerk France Conseils en Propriété Industrielle Immeuble Visium 22, Avenue Aristide Briand 94117 Arcueil Cedex (FR)**

(56) Documents cités:
**EP-A- 1 117 031        WO-A-03/090055**
**WO-A-2004/034251    US-A- 6 112 023**
**US-B1- 6 307 281**

• **CHILDERS B R ET AL: "Scheduling with dynamic voltage/speed adjustment using slack reclamation in multiprocessor real-time systems", IEEE TRANSACTIONS ON PARALLEL AND DISTRIBUTED SYSTEMS, IEEE SERVICE CENTER, LOS ALAMITOS, CA, US, vol. 14, no. 7, 1 July 2003 (2003-07-01), pages 686-700, XP011098805, ISSN: 1045-9219, DOI: 10.1109/TPDS.2003.1214320**
• **JEJURIKAR R ET AL: "Dynamic slack reclamation with procrastination scheduling in real-time embedded systems", DESIGN AUTOMATION CONFERENCE, 2005. PROCEEDINGS. 42ND ANAHEIM, CA, USA 13-17 JUNE 2005, PISCATAWAY, NJ, USA,IEEE, US, 13 June 2005 (2005-06-13), pages 111-116, XP010837187, DOI: 10.1109/DAC.2005.193783 ISBN: 978-1-59593-058-3**

EP 2 266 011 B1

**Description**

La présente invention concerne un procédé de gestion de la consommation d'énergie pour les systèmes multiprocesseurs. Elle s'applique notamment aux besoins en énergie des nouvelles générations de systèmes embarqués multiprocesseurs où la contrainte de durée de vie des batteries devient de plus en plus critique. Ainsi, elle s'applique en particulier aux systèmes embarqués, par exemple pour des applications multimédia ou de télécommunication.

Les systèmes multiprocesseurs intègrent des applications de plus en plus complexes et diversifiées qui exigent des performances de calcul et de mémorisation croissantes. Ces performances croissantes, qui se traduisent d'une part par des fréquences de fonctionnement toujours plus élevées et d'autre part par une augmentation du nombre de processeurs et de circuits de mémoire, sont à l'origine d'une consommation énergétique de plus en plus importante.

Le traitement parallèle d'une application par un ensemble d'éléments de calcul, typiquement des processeurs, nécessite le découpage de cette application en plusieurs blocs de traitement appelés tâches. Ces tâches sont exécutées successivement et parallèlement. Ce découpage a notamment pour but d'exécuter des tâches élémentaires de calcul en parallèle et ainsi accélérer le calcul, les tâches parallèles étant assignées sur plusieurs processeurs. Les architectures exploitant ce type de parallélisme, appelées architectures multiprocesseurs, offrent une grande flexibilité de fonctionnement et de bonnes performances en terme de puissance de calcul. En effet, elles sont capables d'exécuter plusieurs applications en parallèle, ainsi que des applications disposant d'un fort parallélisme au niveau des tâches. Ces architectures multiprocesseurs permettant d'exécuter des applications parallèles comportant des capacités de stockage et de calcul croissant consomment une énergie importante nécessitant une gestion adaptée de cette consommation.

Dans un contexte temps réel, ces architectures sont souvent dimensionnées pour le pire cas en fonction des applications supportées et des contraintes temporelles à respecter. La phase de dimensionnement consiste à caractériser chaque tâche par une durée d'exécution au pire cas appelée WCET selon l'expression anglo-saxonne « Worst Case Execution Time ». Une fois les WCET des différentes tâches calculés, un nombre de processeurs permettant d'exploiter le parallélisme et garantir le respect des contraintes temporelles est fixé au pire cas. Ce nombre de processeurs dépend fortement du choix d'ordonnancement mis en oeuvre pour fixer les priorités d'exécution des tâches tout en respectant les dépendances entre les tâches. Des intervalles d'inactivité de certains processeurs peuvent apparaître en certains points de synchronisation des tâches, ces intervalles d'inactivité étant dus à la variation du taux de parallélisme potentiel de l'application et peuvent être caractérisés selon le comportement d'exécution au pire cas. Si ces intervalles d'inactivité apparaissent au cours de l'exécution réelle de la même façon, des modes de repos peuvent être déterminés hors-ligne et mis en oeuvre au cours de l'exécution, en ligne, pour réduire l'énergie consommée. Malheureusement la variation des durées réelles d'exécutions AET (Actual Execution Time) des tâches par rapport aux durées d'exécutions au pire cas WCET fait varier l'ordre et les dates d'activation des tâches. Ainsi la prédiction hors-ligne de ces intervalles d'inactivité devient difficile. Cette difficulté limite l'exploitation de ces opportunités de réduction de l'énergie consommée qui apparaissent au cours de l'exécution. Les différences entre les comportements au pire cas et les comportements réels deviennent de plus en plus importantes dans les applications dépendantes de données et ayant beaucoup de contrôle.

Ces différences offrent cependant un fort potentiel d'optimisation de la consommation. En effet la variation des durées d'exécution des tâches par rapport à celles au pire cas fait apparaître des excédents temporels. Ces excédents temporels peuvent être exploités pour ralentir les vitesses d'exécutions des tâches suivantes et donc réduire localement la consommation tout en respectant les contraintes temps réel.

Dans un contexte d'ordonnancement global, la difficulté apparaît au niveau de la distribution des excédents temporels, obtenus au cours de l'exécution, pour réduire efficacement l'énergie sans violer les contraintes temporelles. Des solutions traitant le problème de gestion de la consommation au niveau des ressources sont connues. Ces solutions visent à réduire l'énergie consommée par les ressources de calcul (processeurs) dans un système embarqué en se basant sur les techniques dites DPM (Dynamic Power Management) et/ou DVFS (Dynamic Voltage and Frequency Scaling). Les techniques DPM consistent à exploiter les intervalles d'inactivité en passant en modes de repos les ressources non utilisées pendant une durée de temps donnée. Les techniques DVFS visent plutôt à exploiter les excédents temporels et faire baisser localement ou globalement la fréquence et la tension de certaines ressources.

Une première variante non optimale regroupe l'ensemble des méthodes mettant en oeuvre uniquement les techniques DPM en se basant sur la prédiction hors-ligne des intervalles d'inactivité des ressources comme cela est notamment décrit dans un document D1 de A. Iranli et al : « System-level Power Management - An Overview » University of Southern California, Dept of Electrical Engineering, Los Angeles. Mais la variation des durées réelles d'exécutions des tâches par rapport aux durées d'exécutions au pire cas WCET fait varier en-ligne l'ordre et les dates d'activation des tâches. Ainsi, la prédiction hors-ligne de ces dates d'arrivées et des longueurs de ces intervalles d'inactivité devient très difficile.

La mise en oeuvre des techniques DPM basées sur la prédiction peut aboutir dans certains cas, où le profil d'exécution de l'application est plus au moins déterministe, à des résultats intéressants. Dans un contexte général où plusieurs applications avec plusieurs instances dont on ne connaît pas les dates d'arrivée, la mise en oeuvre de ces techniques reste très délicate. En effet, avec une mauvaise prédiction, ces techniques peuvent introduire des latences supplémentaires susceptibles de violer les contraintes temporelles. Une deuxième variante regroupe l'ensemble des méthodes mettant en oeuvre uniquement les techniques DVFS. Cette variante est notamment décrite dans un document D2 de D.Zhu et al : « Scheduling with Dynamic Voltage/Speed Adjustment Using Slack Reclamation in Multiprocessor Real-Time Systems » IEEE Transactions on Parallel and Distributed Systems, vol. 14, N° 7, July 2003 et dans un document D3 de N.Ventoux « Contrôle en ligne des systèmes multiprocesseurs hétérogènes embarqués - élaboration et validation d'une architecture» Thèse de doctorat soutenue le 19 septembre 2006 devant l'Université de Rennes 1. Ces techniques peuvent être mises en oeuvre hors-ligne comme en-ligne. Dans une approche hors-ligne, les couples (tension, fréquence) des différents processeurs peuvent être ajustés globalement en calculant un facteur de ralentissement global (fonction de la contrainte temporelle globale ou deadline de l'application) ou localement en calculant un facteur de ralentissement local à chaque tâche (en fonction de leur contribution au chemin critique de l'application). Dans une approche en-ligne, ces techniques visent à détecter les excédents temporels dus aux variations des durées d'exécution réelles des tâches et les exploiter de façon à réduire l'énergie consommée tout en garantissant le respect des contraintes temporelles.

La difficulté apparaît clairement au niveau de l'élaboration d'une méthode de gestion optimale de la consommation qui reste en adéquation avec un ordonnancement global. En effet, dans un contexte d'ordonnancement global tel que présenté dans les documents D2 et D3 précités, les auteurs se contentent des méthodes sous optimales de distribution des excédents afin de respecter les contraintes temporelles. Dans le document D2, un excédent temporel obtenu au cours de l'exécution est partagé entre des tâches assignées à des ressources différentes de façon à permettre aux tâches de respecter leurs contraintes temporelles. Dans cette méthode, des parties des excédents temporels peuvent être ignorés pour respecter un ordre d'exécution de tâches fixé à priori, en se basant sur les durées d'exécutions au pire cas WCET et une politique d'ordonnancement globale qui exécute la tâche la plus longue avant LTF (Largest Task First). Dans le document D3, la méthode attribue l'excédent temporel obtenu au cours de l'exécution à la tâche suivante dans le graphe de précédence. Cette méthode de distribution des excédents selon les dépendances de donnée ou de contrôle est bien en adéquation avec une politique d'ordonnancement globale, mais elle ne permet pas, par exemple, d'exploiter la totalité des excédents produits par les différentes branches d'une convergence. En effet, uniquement l'excédent le plus petit, parmi les excédents produits par les différentes branches, est mis en oeuvre pour réduire l'énergie consommée.

Un but de l'invention est notamment de pallier les inconvénients précités et de permettre de réduire de façon importante l'énergie consommée, y compris dans un contexte multiprocesseur et d'ordonnancement global.

A cet effet, l'invention a pour objet un procédé de gestion de la consommation d'énergie d'un système multiprocesseur selon la revendication 1. Dans un autre mode de mise en oeuvre possible, dans la deuxième phase, en plus de la détection des intervalles d'inactivité et la mise en oeuvre des modes de repos (DPM), on détecte les excédents temporels pour ajuster dynamiquement les tensions et les fréquences DVFS des processeurs.

La phase de caractérisation hors-ligne comporte par exemple au moins :

- une phase de labellisation des tâches dans laquelle des tâches successives sont regroupées sous des labels ;
- une phase d'ordonnancement global des labels ;
- une phase de stockage des dates de début d'exécution des différents labels et le nombre de processeurs nécessaires à chaque date, le stockage étant effectué dans une structure de données, ladite structure caractérisant le parallélisme des tâches au pire cas.

La date jusqu'à laquelle un processeur peut rester inactif correspond par exemple à la date d'arrivée du prochain label du comportement au pire cas, déterminé hors-ligne, qui augmente le taux de parallélisme.

La phase de caractérisation hors-ligne peut comporter une phase de détermination des modes fonctionnels de départ des processeurs nécessaires à l'exécution de l'application, lesdits modes fonctionnels étant déterminés en fonction des dates d'arrivée des premiers labels.

La construction d'un label répond par exemple aux règles suivantes :

- au niveau d'une convergence du graphe, la construction d'un label est arrêtée avant la tâche de convergence ;
- au niveau d'une divergence du graphe, la construction d'un label est poursuivie selon une branche, et d'autres labels sont construits pour les autres branches ;
- une tâche n'appartient qu'à un seul label.

Un label comporte par exemple le maximum de tâches d'une même branche du graphe.

Dans un autre mode de mise en oeuvre possible, l'excédent temporel produit par une tâche Ti exécutée sur un processeur donné est attribuée à la tâche suivante Ti+1 allouée sur le même processeur.

Les excédents temporels obtenus par différentes tâches sont par exemple cumulés jusqu'à obtenir un temps suffisamment long pour activer un couple (tension, fréquence) inférieur, un excédent temporel étant accumulé avec un autre s'il ne permet pas de passer à un couple (tension, fréquence) inférieur en le considérant tout seul.

Les excédents temporels peuvent être cumulés tout au long de l'exécution et attribués aux tâches terminales des labels.

D'autres caractéristiques et avantages de l'invention apparaîtront à l'aide de la description qui suit faite en regard de dessins annexés qui représentent :

- la figure 1, un exemple de graphe décrivant l'association de tâches pour l'exécution d'une application ;
- la figure 2, un exemple de comportement d'exécution au pire cas du modèle de graphe présenté dans la figure précédente, dans le cas d'une exécution par deux processeurs ;
- la figure 3, un exemple du comportement réel d'exécution des tâches par les deux processeurs ;
- la figure 4, une présentation des deux phases de mise en oeuvre possible du procédé selon l'invention ;
- la figure 5, une présentation des sous-phases possible composant la première phase, la phase de caractérisation du taux de parallélisme hors-ligne, du procédé ;
- la figure 6, un exemple de labellisation du graphe de la figure 1 ;
- la figure 7, une présentation d'une structure de données caractérisant le taux de parallélisme ;
- la figure 8, une illustration d'un exemple de distribution des excédents temporels, en-ligne, en cours d'exécution de l'application.

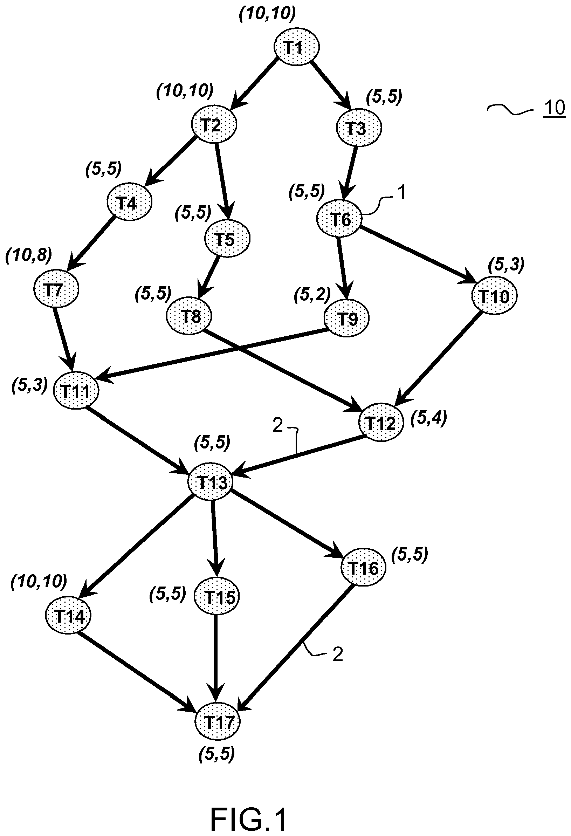

La figure 1 présente un exemple de graphe 10 qui décrit l'association d'un ensemble de tâches Ti et les relations de précédences qui existent entre elles. Dans ce type de modélisation, les tâches sont représentées par des noeuds 1 et les dépendances de données sont représentées par des arcs 2. Un arc 2 qui relie une tâche Ti à une tâche Tj signifie que la tâche Tj ne peut commencer son exécution qu'après la fin de l'exécution de la tâche Ti. Comme indiqué précédemment, ce découpage en tâches vise à exprimer un parallélisme de calcul pouvant se situer dans une application et accélérer ainsi le calcul en assignant des tâches parallèles sur plusieurs processeurs pour satisfaire les contraintes de performance. Une telle architecture consomme une quantité importante d'énergie. Dans un contexte temps réel, ce type d'architecture est généralement dimensionné au pire cas en fonction des applications supportées et des contraintes temporelles à respecter, en caractérisant notamment chaque tâche par une durée d'exécution au pire cas. Dans le mode de représentation de la figure 1, un couple (WCET, AET) indique pour chaque tâche Ti le temps d'exécution au pire cas WCET par sa première composante et le temps d'exécution réel AET par sa deuxième composante.

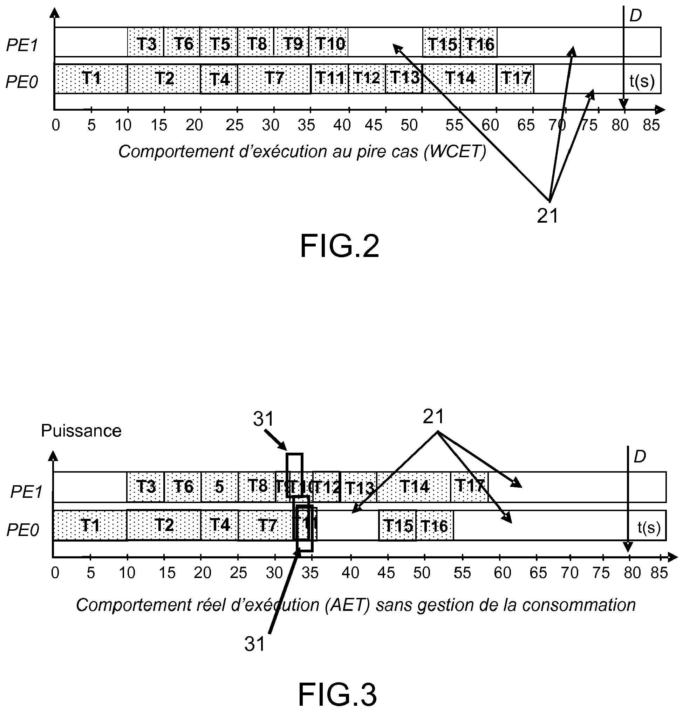

La figure 2 décrit à titre d'exemple un comportement d'exécution au pire cas du modèle de graphe présenté dans la figure 1 selon la politique d'ordonnancement dite EDF (Earliest Deadline First) pour une architecture à deux processeurs. Le procédé selon l'invention qui sera présenté par la suite peut être appliqué à cette politique ainsi qu'à d'autres politiques d'ordonnancement tels que la politique dite LLF (Least Laxity First) et ELLF (Enhanced Least Laxity First) notamment. La figure 2 présente donc l'exécution en parallèle des tâches 1 de la figure 1 par deux processeurs. Les tâches sont exécutées successivement sur les deux processeurs PE0 et PE1 selon les dépendances explicitées par le graphe 10 de la figure 1. Le début et les durées d'exécution des tâches sont représentées en fonction du temps.

Des intervalles d'inactivité 21 dus à la variation du taux de parallélisme peuvent apparaître à certains points de synchronisation, par exemple aux dates 40 et 60 pour le deuxième processeur PE1 et à la date 65 pour le premier processeur PE0. Si ces intervalles d'inactivité apparaissent au cours de l'exécution réelle de la même façon, aux mêmes dates avec les mêmes longueurs et sur les mêmes processeurs, des modes de repos peuvent être calculées hors-ligne et mis en oeuvre au cours de l'exécution, en ligne, pour réduire l'énergie consommée. Malheureusement, comme cela a été indiqué précédemment, la variation des durées réelles d'exécution des tâches par rapport à leurs durées d'exécution au pire cas WCET peut varier l'ordre et les dates d'activation des tâches. Ainsi la prédiction hors-ligne des dates d'arrivée et des longueurs des intervalles d'inactivité 21 devient très difficile. Cette difficulté limite l'exploitation des opportunités de réduction de l'énergie consommée qui peuvent apparaître au cours de l'exécution des tâches.

La figure 3 illustre le comportement réel d'exécution des tâches par les deux processeurs PE0 et PE1. Cette figure 3 montre par ailleurs la différence qui peut y avoir entre le comportement au pire cas illustré par la figure 2 et le comportement réel. La variation des durées d'exécutions des tâches par rapport à celles au pire cas fait apparaître des excédents temporels 31. Ces excédents temporels peuvent être exploités pour ralentir les vitesses d'exécutions des tâches suivantes et donc réduire la consommation, tout en respectant les contraintes temps réel. Par exemple la tache T9 commençant à la date 30 n'a consommé que deux unités de temps de sa durée d'exécution fixée au pire cas à 5 unités de temps, cette tâche T9 étant exécutée au pire cas entre les dates 30 et 35. Dans ce contexte l'excédent temporel 31, égal à 3 unités, récupéré de la tâche T9 peut être attribué à l'une des tâches suivantes pour ralentir sa vitesse d'exécution. Le ralentissement de la vitesse d'exécution d'une tâche se traduit notamment par le passage du processeur traitant cette tâche d'un couple fréquence-tension à un nouveau couple plus faible, en fréquence de fonctionnement et en tension, permettant de réduire l'énergie consommée. En effet la puissance consommée par un processeur dépend de façon quadratique de la tension d'alimentation qui peut être réduite en réduisant la vitesse de fonctionnement. Les relations suivantes décrivent cette dépendance de la puissance consommée $P_{dynamique}$ :

$$P_{dynamique} = \alpha . C_L . V_{dd}^2 . f_{clk} \qquad (1)$$

$$f_{clk} = K \frac{(V_{dd} - V_{th})^2}{V_{dd}} \qquad (2)$$

où :

- $\alpha$ représente le facteur d'activité, correspondant au nombre moyen de transitions de l'état haut à l'état bas par cycle d'horloge ;
- $C_L$ représente la capacité chargée pendant une transition ;
- $V_{dd}$ représente la tension d'alimentation ;
- $f_{clk}$ représente la fréquence d'horloge du circuit ;
- $V_{th}$ représente la tension de seuil ;
- $K$ est une constante qui dépend des caractéristiques du circuit.

Dans un contexte d'ordonnancement global, il est difficile d'utiliser la distribution des excédents temporels obtenus en cours d'exécution pour réduire efficacement l'énergie sans violer les contraintes temporelles.

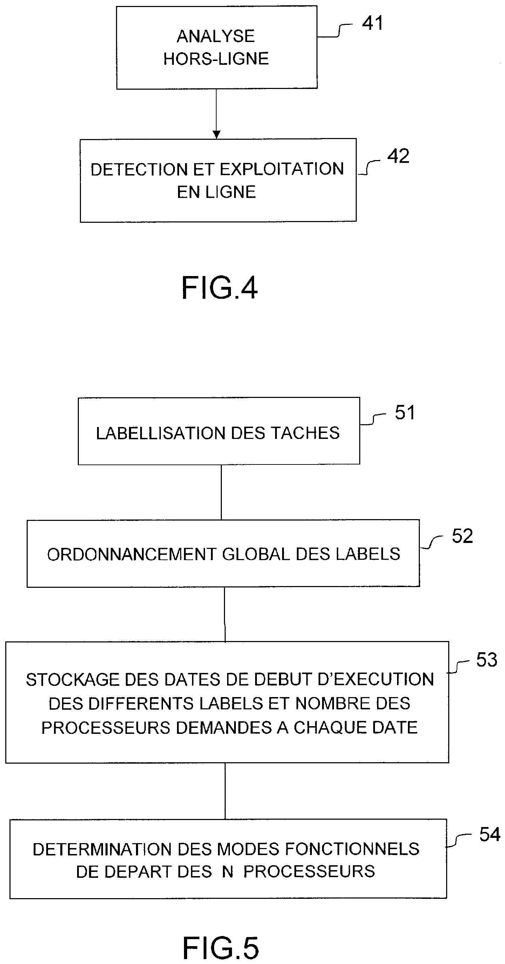

La figure 4 illustre les deux phases possibles pour la mise en oeuvre du procédé selon l'invention. En particulier le procédé comporte une phase de caractérisation hors-ligne 41 et une phase suivante 42 de détection et d'exploitation en ligne. Dans la phase hors-ligne 41 le procédé caractérise l'évolution dans le temps du taux de parallélisme potentiel d'une application donnée. Le taux de parallélisme correspond, à un instant donné, au nombre de tâches actives sur le nombre de processeurs disponibles dans l'architecture. Les informations issues de la caractérisation hors-ligne sont utilisées par la suite dans la phase en ligne 42 pour déterminer les durées des intervalles d'inactivité qui apparaîtront au cours de l'exécution. Ainsi en fonction de ces durées et des caractéristiques des processeurs cibles, des modes de repos peuvent être déterminés et activés. En plus de la mise en oeuvre en-ligne des modes de repos, le procédé détecte dans cette phase tous les excédents temporels produits par les tâches et ajuste dynamiquement les tensions et les fréquences des processeurs pour réduire davantage la consommation.

La figure 5 présente un exemple de réalisation de la phase de caractérisation hors-ligne 41 selon les sous-phases successives suivantes :

- une phase 51 de labellisation des tâches ;
- une phase 52 d'ordonnancement des tâches ;
- une phase 53 de stockage des dates de début d'exécution des différents labels et des nombres de processeurs nécessaires à chaque date, le stockage étant effectué dans une structure de données caractérisant le parallélisme des tâches ;
- une phase 54 de détermination des modes fonctionnels de départ des N processeurs nécessaires à l'exécution de l'application.

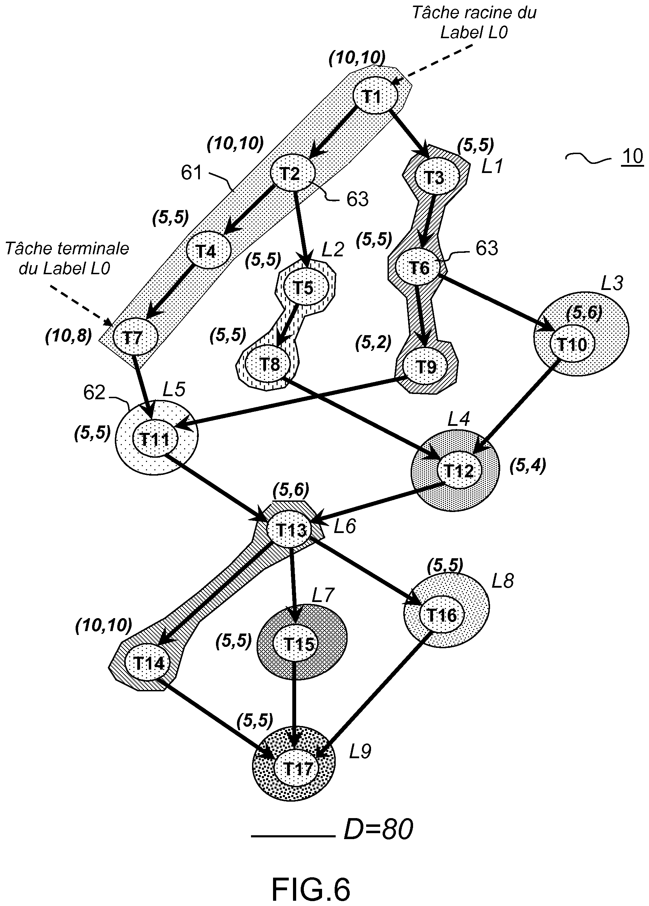

La figure 6 illustre la phase de labellisation 51, dans cette phase le procédé selon l'invention décompose le graphe de tâches 1 de l'application en labels 61. Un label Ln regroupe ainsi une ou plusieurs tâches Ti interdépendantes susceptibles d'être exécutées de façon séquentielle. La figure 6 illustre une telle labellisation. Neuf labels L1, ... L9 regroupent les 17 tâches T1, ... T17. Le principe de construction des labels Ln répond notamment aux règles suivantes :

- un label regroupe un maximum de tâches ;
- au niveau d'une convergence 62, la construction d'un label est arrêtée avant la tâche de convergence ;
- au niveau d'une divergence 63, la construction d'un label est poursuivie selon une branche, L0 par exemple, et d'autres labels sont construits pour les autres branches, L1 ou L2 par exemple ;
- une tâche n'appartient qu'à un seul label.

Un label est ainsi un regroupement de tâches, pouvant se restreindre à une seule, permettant de repérer une augmentation de 1 du taux de parallélisme. Cette augmentation peut nécessiter un processeur supplémentaire pour traiter les tâches de ce label. La labellisation 51 permet ainsi de façon similaire de repérer une diminution de 1 du taux de parallélisme à la fin d'exécution d'une tâche de fin de ce label.

Une fois le graphe de l'application décomposé en label, un ordonnancement global 52 du graphe est réalisé hors-ligne. Cet ordonnancement peut par exemple être basé sur des priorités statiques ou dynamiques telles que définies par la politique EDF-LTF (Earliest Deadline First-Largest Task First) ou dans la politique ELLF (Enhanced Least Laxity First). La figure 2 précédente décrit un tel ordonnancement hors ligne du graphe en se basant sur les durées d'exécution au pire cas WCET et la politique EDF-LTF. Une fois le comportement d'exécution au pire cas ainsi obtenu, on effectue un stockage 53 dans une structure de données des dates de début d'exécution des différents labels Ln ainsi que le nombre de processeurs nécessaires à chaque date.

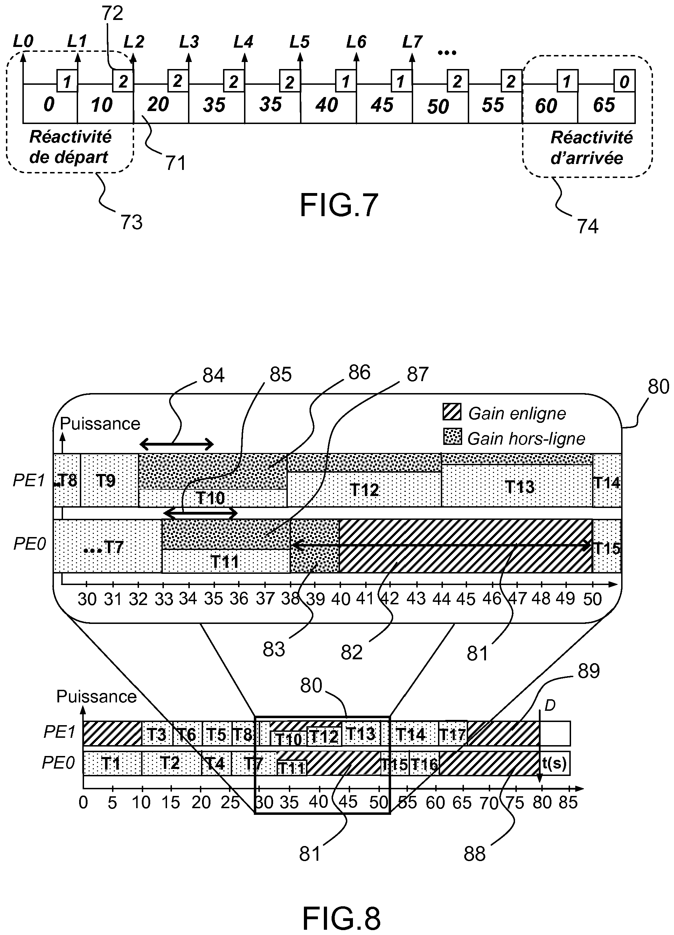

La figure 7 illustre cette structure de données caractérisant le parallélisme potentiel au pire cas. Les dates de début 71, par exemple les dates 0, 10, 20, 35, 40, 45, 50, 55, 60, 65 et le nombre 72 de processeurs nécessaires à chacune de ces dates sont stockées à des places mémoires successives . Par exemple, à la date 0 il n'y a que la tâche T1, tâche de départ encore appelée tâche racine du label L1, qui débute son exécution. Ainsi un seul processeur est nécessaire pour traiter cette tâche. Le nombre 1 est donc indiqué comme nombre 72 de processeurs nécessaires à l'exécution des tâches. A la date 35 par exemple, les deux labels L3 et L5 débutent leur exécution simultanément et nécessitent deux processeurs, d'où le nombre 2 indiqué. Les deux dates d'arrivées sont stockées séparément dans la structure de données.

Après la caractérisation du parallélisme potentiel ainsi effectuée, le procédé effectue la détermination 54 des modes fonctionnels de départ des N processeurs nécessaires à l'exécution de l'application. L'ensemble de ces modes fonctionnels sera appelé par la suite réactivité de départ. Cette réactivité est déterminée en fonction de l'arrivée des N premiers labels augmentant le parallélisme potentiel. Dans l'exemple précédent, illustré notamment par les figures 6 et 7, ces sont les deux premiers labels, L0 et L1, qui fixent la réactivité de départ 73. En effet, un seul processeur actif est requis de la date 0, date d'apparition du label 0, jusqu'à la date 10, date d'apparition du label L1, pour exécuter la première tâche T1 du label L0.

Ainsi, avec ces informations relatives à la variation du taux de parallélisme potentiel, il est possible de fixer une réactivité de départ telle que :

- le premier processeur PE0 est actif ;
- le deuxième processeur PE1 est dans l'état inactif (mode de repos), de type « standby » si la date d'arrivée du label L1 est supérieure à la durée nécessaire pour passer de l'état « standby » à l'état actif.

La durée de passage d'un mode à l'autre est une caractéristique de la ressource. Elle peut être extraite de la machine d'état en puissance de la ressource, dite PSM (Power State Machine), fournie par le constructeur. Cette machine d'état décrit les différents modes de repos (non-fonctionnels) supportés par la ressource, la puissance consommée relative à chaque mode et les transitions possibles avec leurs coûts temporels et énergétiques. Une fois les informations relatives au parallélisme potentiel et la réactivité de départ déterminées, la gestion en ligne de la consommation peut être effectuée dans la phase suivante 42.

Pendant la phase suivante 42, le procédé selon l'invention détecte en-ligne tous les intervalles d'inactivité qui apparaissent au cours de l'exécution, ces intervalles étant dus à une baisse du taux de parallélisme. Cette baisse se traduit à un instant donné par un nombre de tâches actives inférieur au nombre de processeurs actifs dans l'architecture. Une fois un intervalle d'inactivité détecté, le procédé détermine et active le mode DPM adéquat.

Dans la réalité, un processeur est caractérisé par un nombre donné de points de fonctionnement définis par des couples (tension, fréquence) et des modes de repos, tels que « standby » ou « sleep » par exemple. Le passage d'une ressource d'un point de fonctionnement à un autre introduit une latence temporelle et nécessite une énergie supplémentaire non négligeable. Afin de garantir le respect des contraintes temporelles et la rentabilité d'un passage d'un point de fonctionnement à un autre, le procédé selon l'invention prend en compte ces surcoûts temporels et énergétiques dans chaque décision d'endormissement d'une ressource.

En surveillant en-ligne la variation réelle du taux de parallélisme d'une application, l'invention détecte tout intervalle d'inactivité dû à une baisse du nombre de labels actifs en même temps. En fonction de cette variation du taux de parallélisme, un ou plusieurs processeurs peuvent être mis en mode repos jusqu'à une augmentation potentielle du taux de parallélisme. Il est à noter qu'au cours de l'exécution, un intervalle d'inactivité peut apparaître plus tôt que sa date d'apparition prévue dans le modèle au pire cas. Ce phénomène est notamment dû à la variation des durées réelles d'exécution AET par rapport aux durées d'exécution estimées au pire cas WCET. Une fois l'intervalle d'inactivité détecté l'invention détermine en-ligne, grâce à la structure de données 71, 72 construite hors-ligne, la date jusqu'à laquelle le processeur peut rester inactif. Cette date correspond à la date d'arrivée au pire cas du prochain label qui augmente le taux de parallélisme.

En plus de la gestion des modes de repos, le procédé selon l'invention permet d'ajuster dynamiquement, au cours de l'exécution, les tensions et les fréquences de fonctionnement des différents processeurs. Cette gestion est effectuée en exploitant les excédents temporels « slack times » obtenus au cours de l'exécution. Ces excédents sont dus aux variations de durées réelles d'exécution AET des tâches par rapport aux durées d'exécution au pire cas WCET. Selon l'invention, ces excédents temporels sont attribués aux tâches suivantes par rapport aux dépendances de ressources pour réduire l'énergie consommée sans violer les contraintes temporelles. Le procédé selon l'invention détecte en-ligne tous les excédents temporels dus aux variations des durées réelles d'exécution des tâches par rapport aux durées d'exécution au pire cas. Une fois un excédent temporel détecté, le couple (tension, fréquence) adéquat est déterminé et activé. Afin de rapprocher le comportement réel d'exécution de l'application du comportement d'exécution au pire cas et d'exploiter au mieux les données caractérisant le parallélisme potentiel, les excédents temporels sont distribués selon les dépendances de ressource. Ainsi, on attribue l'excédent temporel produit par une tâche Ti qui s'exécute sur le processeur Pj à la tâche suivante Ti+1 assignée à cette dernière ressource.

La présente invention comprend donc deux techniques de gestion en-ligne de la consommation, une technique de type DVFS et une deuxième de type DPM qui peuvent être appliquées séparément ou de manière simultanée. Il est à noter ici que le mise en oeuvre de la technique DVFS sans gestion des modes de repos (DPM) ne nécessite pas la phase d'analyse hors-ligne 41. En effet, la détection et l'exploitation des excédents temporels sont effectuées en-ligne.

La figure 8 illustre un exemple de mise en oeuvre des techniques DPM et DVFS selon l'invention appliquées au cas illustré par les figures précédentes. Un intervalle d'inactivité 81 apparaît sur le processeur PE0 après la date 35. Plus précisément en agrandissant la zone 80 englobant l'intervalle d'inactivité, il apparaît que celui-ci apparaît à la date 38 au lieu de la date 40 calculée au pire cas comme illustré par la figure 2. La zone 80 montre l'intervalle d'inactivité 82 calculé hors-ligne au pire cas et l'intervalle supplémentaire 83 obtenu en-ligne, ce dernier constituant un excédent temporel. Le décalage de deux unités de temps est du à l'excédent temporel généré par la tâche T11 fin du label L5 représenté sur la figure 6. Cet excédent temporel ne peut pas être exploité par une technique DVFS notamment étant donné qu'il n'y a plus de tâches à assigner à la ressource concerné, le processeur PE0. Selon l'invention cet excédent est pris en compte dans l'intervalle d'inactivité calculé en ligne. Ce dernier est souvent plus long que l'intervalle d'inactivité 82 prévu hors-ligne. Ainsi, avec ce gain en-ligne, un mode de repos plus important que celui déterminé hors-ligne peut être mis en oeuvre. Pour déterminer le mode de repos adéquat, on peut utiliser par exemple l'algorithme dit LEA (Lower Envelope Algorithm) notamment décrit dans un document D4 de S. Irani « Online Stratégies for Dynamic Power Management in Systems with Multiple Power-Saving States », ACM Transactions on Embedded Computing Systems, Vol. 2, N°3, August 2003, pages 325-346. En effet, cet algorithme peut être étendu pour prendre en compte les surcoûts temporels et énergétiques relatifs à l'endormissement et le réveil de ressources afin de garantir le respect des contraintes temporelles.

La figure 8 illustre par ailleurs un exemple de distribution des excédents temporels obtenus au cours de l'exécution. Par exemple, l'excédent temporel 84 produit par la tâche T9 est consommé par la tâche T10 étant donné que cette dernière s'exécute directement après la tâche T9, sur le même processeur PE1. Dans le comportement d'exécution au pire cas, la fin de la tâche T9 était estimée à la date 35 alors que son exécution réelle se termine à la date 32. Il y a donc un excédent temporel de trois unités de temps. De même l'excédent temporel 85 produit par la tâche T7, égal à deux unités de temps, est attribué à la tâche T11 qui suit, sur le même processeur PE0. Il apparaît bien par ailleurs qu'au niveau de cette tâche T11, qui est une tâche de convergence comme le montre la figure 7, aucun excédent temporel n'est perdu.

Un excédent obtenu 84, 85 est utilisé pour faire passer le processeur traitant la tâche productrice de cet excédent d'un couple (fréquence, tension) à un nouveau couple plus faible en puissance permettant ainsi de réduire l'énergie consommée, selon un mode DVFS adéquat. La figure 8 montre bien les gains 86, 87 et 83 de puissance obtenus en-ligne qui s'ajoutent au gain à l'intervalle d'inactivité 82 estimé hors-ligne..

Dans la réalité il peut arriver que la tâche venant d'être exécutée produise un excédent temporel insuffisant pour que la tâche suivante sur le même processeur active un mode DVFS. Dans ce contexte, on cumule les excédents jusqu'à l'obtention d'un excédent suffisamment long pour activer un mode DVFS. Cette solution peut également être mise en oeuvre pour des raisons d'optimisation. En effet, plusieurs excédents temporels peuvent être cumulés sur une ressource pour activer par la suite un mode DVFS plus intéressant que les modes susceptibles d'être activés par les excédents considérés séparément. Dans ce cas, les excédents temporels sont cumulés tout au long de l'exécution des branches parallèles, désignées par des labels. Les excédents temporels accumulés sur les différents processeurs sont exploités avant les convergences en les attribuant aux tâches terminales, une tâche terminale étant une tâche de fin de label.

Une gestion en-ligne de la consommation peut avantageusement être mise en oeuvre en combinant les deux techniques DPM et DVFS. Par cette combinaison, l'invention permet d'exploiter tous les excédents temporels sans exception, y compris les excédents produits par différentes branches d'une convergence. Elle reproduit le comportement d'exécution au pire cas tout en attribuant l'excédent produit par une tâche à la prochaine tâche allouée sur la même ressource. Cette méthode de distribution des excédents fait apparaître, au cours de l'exécution, chaque intervalle d'inactivité à la date prévue hors-ligne. En plus de cet intervalle, l'invention détecte tout excédent temporel susceptible de prolonger cet intervalle d'inactivité. Cet excédent est généré par la tâche de fin de label exécutée juste avant l'apparition de cet intervalle d'inactivité dû à une baisse du nombre de labels actifs en même temps. Comme il a été indiqué précédemment, les excédents temporels qui apparaissent juste avant des intervalles d'inactivité ne sont pas exploitables par une technique du type DVFS. Cette limite est levée par l'invention en utilisant la technique DPM. Ainsi, une fois l'intervalle d'inactivité détecté, on détermine et active en-ligne le mode de repos adéquat.

La gestion en-ligne de la consommation effectuée selon l'invention est applicable dans les contextes d'applications apériodiques et périodiques. Il suffit de définir les modes fonctionnels d'arrivées, appelés réactivité d'arrivée, des différents processeur à la fin de l'application. En fonction de cette réactivité d'arrivée, on détermine en-ligne à la fin d'exécution de chaque tâche terminale des N derniers labels, le mode de repos adéquat dans lequel la ressource peut se mettre. Par exemple, la fin des deux derniers labels L8 et L9 par les tâches respectives T16 et T17 des figures 6 et 8 marque la libération de deux processeurs. La figure 8 montre qu'à la date 60 le label L8 finit son exécution avec la fin de la tâche T16 et libère le processeur PE0. De même à la date 65, c'est le dernier label de l'application L9 qui finit son exécution avec la fin de la tâche T17. Ainsi, à la fin d'exécution de chacun de ces labels, un mode de repos peut être déterminé en fonction des intervalles 88, 89 d'inactivité détectés.

Pour une application périodique, la gestion des modes DPM des différentes itérations de l'application reste valable en utilisant la même structure de données décrivant les dates d'arrivées des labels et le parallélisme potentiel correspondant à la première itération. Il suffit de mettre à jour les dates d'arrivée des labels pour chaque itération. La date d'arrivée d'un label i de l'itération d'ordre j+1 est égale à sa date d'arrivée à l'itération j augmentée de la période T de l'application. Dans ce cas, des modes de repos correspondants à la réactivité d'arrivée sont calculés en-ligne à la fin de chaque itération. Ces modes sont calculés en fonction des dates d'arrivée des N premiers labels de l'itération suivante.

Dans un contexte multi-applicatif et multi-instances d'une même application, on caractérise le parallélisme potentiel au pire cas pour chaque application. Afin de garantir les contraintes temporelles, l'architecture doit être dimensionnée en fonction du nombre d'applications et du nombre d'instances de chacune d'elles qu'elle doit supporter. Dans ce cas, on augment les ressources en fonction du nombre d'applications et/ou d'instances. Par exemple, si un système vise à exécuter en parallèle une application donnée qui nécessite deux processeurs et deux instances d'une autre application nécessitant trois processeurs, l'architecture doit intégrer huit processeurs. Dans ce cas, une des deux versions d'ordonnancement avec gestion de la consommation peut être mise en oeuvre.

Une première version basée sur le partage total des ressources avec un ordonnancement global des tâches venant des différentes applications et/ou instances peut être utilisée. Avec cette version, la distribution des excédents selon des dépendances de ressources reste valable. Ainsi, un excédent temporel produit par une tâche venant d'une application donnée peut être attribué à une tâche venant d'une autre application tant que ces deux tâches sont assignées à la même ressource. Quant à la gestion des modes DPM, une opération de fusion en-ligne des différentes structures de données, correspondant aux modélisations du taux de parallélisme potentiel des différentes applications et de leurs instances est mise en place. Cette fusion consiste notamment à mettre à jour les dates d'arrivée des labels de chaque application et/ou instance et de les fusionner dans un ordre croissant. La structure résultante est exploitée de la même façon que celle en contexte mono-applicatif.

Une deuxième version est basée sur la réservation des ressources pour chaque application et/ou instance avec un ordonnancement global au niveau des tâches et par partitionnement au niveau des applications. Plus précisément, l'exécution des tâches de chaque application/instance est effectuée en se basant sur un ordonnancement global et une allocation limitée aux ressources réservées à cette dernière. Dans ce cas, la distribution des excédents temporels est gérée de la même façon par rapport aux dépendances de ressources. Avec la répartition de ressources par application, les excédents temporels obtenus par des tâches d'une application donnée sont exploitées par d'autres tâches de la même application. Ainsi, aucun excédent temporel n'est partagé entre deux applications différentes. Les modes DPM sont gérés séparément en se basant sur les données caractérisant le parallélisme potentiel issu des différentes applications mais chacune considérée à part.

## Revendications

**1.** Procédé de gestion de la consommation d'énergie d'un système multiprocesseur exécutant au moins une application selon un graphe (10) de tâches (1, Ti), ledit procédé comportant au moins, pour chaque application :

    - une première phase (41) de caractérisation hors-ligne de la variation du taux de parallélisme potentiel d'exécution des tâches en fonction du temps, cette caractérisation étant basée sur le comportement des tâches au pire cas ;
    - une deuxième phase (42) de détection et d'exploitation en-ligne des intervalles d'inactivité potentiels, la date jusqu'à laquelle un processeur concerné peut rester inactif étant obtenue en fonction du taux de parallélisme potentiel au pire cas caractérisé hors-ligne, un mode de repos adéquat étant calculé et activé en fonction de la date jusqu'à laquelle le processeur peut rester inactif, la deuxième phase (42) exécutant une détection et une exploitation des excédents temporels (84, 85) produits par les tâches durant l'exécution réelle par rapport aux durées d'exécution du comportement au pire cas, l'excédent temporel produit par une tâche étant attribué à la tâche allouée immédiatement après sur le même processeur pour réduire sa vitesse d'exécution, cette réduction de la vitesse d'exécution étant réalisée en passant le processeur d'un couple en tension et fréquence donné à un couple inférieur.

2. Procédé selon la revendication 1, **caractérisé en ce que** dans la deuxième phase (42), en plus de la détection des intervalles d'inactivité et la mise en oeuvre des modes de repos (DPM), on détecte les excédents temporels (84, 85) pour ajuster dynamiquement les tensions et les fréquences (DVFS) des processeurs.

3. Procédé selon l'une quelconque des revendications précédentes, **caractérisé en ce que** la phase (41) de caractérisation hors-ligne comporte au moins :

   - une phase (51) de labellisation des tâches dans laquelle des tâches successives sont regroupées sous des labels ;
   - une phase (52) d'ordonnancement global des labels ;
   - une phase (53) de stockage des dates de début d'exécution des différents labels et le nombre de processeurs nécessaires à chaque date, le stockage étant effectué dans une structure de données (71, 72), ladite structure caractérisant le parallélisme des tâches au pire cas.

4. Procédé selon la revendication 3, **caractérisé en ce que** la date jusqu'à laquelle un processeur peut rester inactif correspond à la date d'arrivée du prochain label du comportement au pire cas, déterminé hors-ligne, qui augmente le taux de parallélisme.

5. Procédé selon l'une quelconque des revendications 3 et 4, **caractérisé en ce que** la phase (41) de caractérisation hors-ligne comporte une phase (54) de détermination des modes fonctionnels de départ des processeurs nécessaires à l'exécution de l'application, lesdits modes fonctionnels (73) étant déterminés en fonction des dates d'arrivée des premiers labels.

6. Procédé selon l'une quelconque des revendications 3 à 5, **caractérisé en ce que** la construction d'un label (61, Ln) répond aux règles suivantes :

   - au niveau d'une convergence (62) du graphe, la construction d'un label est arrêtée avant la tâche de convergence ;
   - au niveau d'une divergence (63) du graphe, la construction d'un label est poursuivie selon une branche, et d'autres labels sont construits pour les autres branches ;
   - une tâche n'appartient qu'à un seul label.

7. Procédé selon l'une quelconque des revendications 3 à 5, **caractérisé en ce qu'**un label (61) comporte le maximum de tâches d'une même branche du graphe.

8. Procédé selon l'une quelconque des revendications précédentes, **caractérisé en ce que** les excédents temporels (84, 85) obtenus par différentes tâches sont cumulés jusqu'à obtenir un temps suffisamment long pour activer un couple en tension et fréquence inférieur, un excédent temporel étant accumulé avec un autre s'il ne permet pas de passer à un couple en tension et fréquence inférieur en le considérant tout seul.

9. Procédé selon l'une quelconque des revendications 3 à 8, **caractérisé en ce que** les excédents temporels sont cumulés tout au long de l'exécution et attribués aux tâches terminales des labels.

**Patentansprüche**

1. Verfahren zum Verwalten des Verbrauchs von Energie eines Multiprozessorsystems, das mindestens eine Anwendung abarbeitet, gemäß einer Grafik (10) von Aufgaben (1, Ti), wobei das Verfahren für jede Anwendung mindestens Folgendes umfasst:

   - eine erste Phase (41) des Offline-Charakterisierens der Variation des Verhältnisses von potentieller Parallelität der Ausführung der Aufgaben in Abhängigkeit von der Zeit, wobei diese Charakterisierung auf dem Verhalten von Aufgaben im schlimmsten Fall basiert;
   - eine zweite Phase (42) des Online-Erkennens und -Nutzens von potentiellen Inaktivitätsintervallen, wobei der Zeitpunkt, bis zu dem ein jeweiliger Prozessor inaktiv bleiben kann, in Abhängigkeit vom offline charakterisierten Verhältnis von potentieller Parallelität im schlimmsten Fall erhalten wird, wobei ein angepasster Ruhemodus berechnet und in Abhängigkeit von dem Zeitpunkt aktiviert wird, bis zu dem der Prozessor inaktiv bleiben kann,

wobei die zweite Phase (42) eine Erkennung und eine Nutzung von Zeitüberschüssen (84, 85) ausführt, produziert von den Aufgaben während der realen Ausführung mit Bezug auf die Dauern der Ausführung des Verhaltens im schlimmsten Fall, wobei der von einer Aufgabe produzierte Zeitüberschuss der unmittelbar danach auf demselben Prozessor zugeordneten Aufgabe zugeschrieben wird, um deren Ausführungsgeschwindigkeit zu reduzieren, wobei diese Reduzierung der Ausführungsgeschwindigkeit realisiert wird, indem der Prozessor von einem gegebenen Spannungs- und Frequenzpaar zu einem kleineren Paar übergeht.

2. Verfahren nach Anspruch 1, **dadurch gekennzeichnet, dass** in der zweiten Phase (42), zusätzlich zur Erkennung von Inaktivitätsintervallen und der Implementierung der Ruhemodi (DPM), die Zeitüberschüsse (84, 85) zum dynamischen Justieren der Spannungen und Frequenzen (DVFS) der Prozessoren erkannt werden.

3. Verfahren nach einem der vorherigen Ansprüche, **dadurch gekennzeichnet, dass** die Offline-Charakterisierungsphase (41) mindestens Folgendes umfasst:

   - eine Phase (51) des Kennzeichnens der Aufgaben, in der aufeinanderfolgende Aufgaben unter Labels gruppiert werden;
   - eine Phase (52) des globalen Ordnens der Labels;
   - eine Phase (53) des Speicherns von Zeitpunkten des Beginns der Ausführung der verschiedenen Labels und der Anzahl von zu jedem Zeitpunkt notwendigen Prozessoren, wobei die Speicherung in einer Datenstruktur (71, 72) erfolgt, wobei die Struktur die Parallelität der Aufgaben im schlimmsten Fall charakterisiert.

4. Verfahren nach Anspruch 3, **dadurch gekennzeichnet, dass** der Zeitpunkt, bis zu dem ein Prozessor inaktiv bleiben kann, dem Zeitpunkt der Ankunft des nächsten Labels des Verhaltens im schlimmsten Fall, offline bestimmt, entspricht, was die Parallelität erhöht.

5. Verfahren nach einem der Ansprüche 3 und 4, **dadurch gekennzeichnet, dass** die Offline-Charakterisierungsphase (41) eine Phase (54) des Bestimmens der Ausgangsbetriebsarten der für die Ausführung der Anwendung notwendigen Prozessoren umfasst, wobei die Betriebsarten (73) in Abhängigkeit von den Ankunftszeitpunkten der ersten Labels bestimmt werden.

6. Verfahren nach einem der Ansprüche 3 bis 5, **dadurch gekennzeichnet, dass** der Aufbau eines Labels (61, Ln) den folgenden Regeln entspricht:

   - bei einer Konvergenz (62) der Grafik wird der Aufbau eines Labels vor der Konvergenzaufgabe gestoppt;
   - bei einer Divergenz (63) der Grafik verläuft der Aufbau eines Labels über einen Zweig und andere Labels werden für die anderen Zweige aufgebaut;
   - eine Aufgabe gehört nur zu einem einzigen Label.

7. Verfahren nach einem der Ansprüche 3 bis 5, **dadurch gekennzeichnet, dass** ein Label (61) das Maximum an Aufgaben eines selben Zweigs der Grafik einschließt.

8. Verfahren nach einem der vorherigen Ansprüche, **dadurch gekennzeichnet, dass** die von verschiedenen Aufgaben erhaltenen Zeitüberschüsse (84, 85) angesammelt werden, bis eine ausreichend lange Zeit erhalten wird, um ein kleineres Spannungs- und Frequenzpaar zu aktivieren, wobei ein Zeitüberschuss mit einem anderen akkumuliert wird, wenn er es nicht zulässt, zu einem kleineren Spannungs- und Frequenzpaar überzugehen, wenn er allein berücksichtigt wird.

9. Verfahren nach einem der Ansprüche 3 bis 8, **dadurch gekennzeichnet, dass** die Zeitüberschüsse zusammen mit der Ausführung angesammelt und den Endaufgaben der Labels zugeschrieben werden.

**Claims**

1. A method for managing the energy consumption of a multiprocessor system executing at least one application according to a chart (10) of tasks (1, Ti), said method comprising at least, for each application:

- a first phase (41) for off-line characterization of the variation of the potential rate of parallelism of execution of the tasks as a function of time, this characterization being based on the worst-case behavior of the tasks;
- a second phase (42) for on-line detection and exploitation of the potential inactivity intervals, the time until which a processor concerned may remain inactive being obtained according to the worst-case potential rate of parallelism characterized off-line, an appropriate idle mode being calculated and activated according to the time until which the processor may remain inactive,

wherein the second phase (42) executes a detection and an exploitation of the time excesses (84, 85) produced by the tasks during actual execution relative to the execution times of the worst-case behavior, the time excess produced by a task being assigned to the task allocated immediately after on the same processor to reduce its execution speed, this reduction of the execution speed being obtained by switching the processor from a given voltage and frequency to a lower voltage and lower frequency.

2. The method as claimed in claim 1, **characterized in that**, in the second phase (42), in addition to the detection of the inactivity intervals and the implementation of the idle modes (DPM), the time excesses (84, 85) are detected to dynamically adjust the voltages and the frequencies (DVFS) of the processors.

3. The method as claimed in any of the preceding claims, **characterized in that** the off-line characterization phase comprises (41) at least:

- a task labeling phase (51) in which successive tasks are grouped together under labels;
- a global label scheduling phase (52);
- a phase for storing the execution start times of the various labels and the number of processors necessary at each time (53), the storage being performed in a data structure (71, 72), said structure characterizing the worst-case parallelism of the tasks.

4. The method as claimed in claim 3, **characterized in that** the time until which a processor may remain inactive corresponds to the time of arrival of the next label of the worst-case behavior, determined off-line, which increases the rate of parallelism.

5. The method as claimed in any of claims 3 and 4, **characterized in that** the off-line characterization phase (41) includes a phase (54) for determining functional start modes for the processors necessary for the execution of the application, said functional modes (73) being determined according to the arrival times of the first labels.

6. The method as claimed in any of claims 3 to 5, **characterized in that** the construction of a label (61, Ln) satisfies the following rules:

- at the level of a convergence (62) in the chart, the construction of a label is stopped before the convergence task;
- at the level of a divergence (63) of the chart, the construction of a label is continued along a branch, and other labels are constructed for the other branches;
- a task belongs only to a single label.

7. The method as claimed in any of claims 3 to 5, **characterized in that** a label (61) includes the maximum of tasks of one and the same branch of the chart.

8. The method as claimed in any of the preceding claims, **characterized in that** the time excesses (84, 85) obtained by different tasks are aggregated until a time long enough to activate a lower voltage and a lower frequency is obtained, a time excess being aggregated with another if it does not allow for a switch to a lower voltage and a lower frequency when considered on its own.

9. The method as claimed in any of claims 3 to 8, **characterized in that** the time excesses are aggregated throughout execution and assigned to the terminal tasks of the labels.

FIG.1

Comportement d'exécution au pire cas (WCET)

FIG.2

Comportement réel d'exécution (AET) sans gestion de la consommation

FIG.3

ANALYSE
HORS-LIGNE — 41

↓

DETECTION ET EXPLOITATION
EN LIGNE — 42

# FIG.4

LABELLISATION DES TACHES — 51

ORDONNANCEMENT GLOBAL DES LABELS — 52

STOCKAGE DES DATES DE DEBUT D'EXECUTION
DES DIFFERENTS LABELS ET NOMBRE DES
PROCESSEURS DEMANDES A CHAQUE DATE — 53

DETERMINATION DES MODES FONCTIONNELS
DE DEPART DES N PROCESSEURS — 54

# FIG.5

Tâche racine du
Label L0

(10,10)

T1

(10,10)

61

T2

(5,5)

63

T3

(5,5)

L1

~ 10

(5,5)

Tâche terminale
du Label L0

T4

(5,5)

T5

L2

(5,5)

T6

63

(10,8)

T7

(5,5)

T8

(5,2)

T9

L3

(5,6)

T10

62

L5

(5,5)

T11

L4

T12

(5,4)

(5,6)

T13

L6

(5,5)

L8

T16

(10,10)

L7

(5,5)

T15

T14

(5,5)

T17

L9

D=80

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. IRANLI et al.** System-level Power Management - An Overview. University of Southern California, Dept of Electrical Engineering
- **D.ZHU et al.** Scheduling with Dynamic Voltage/Speed Adjustment Using Slack Reclamation in Multiprocessor Real-Time Systems. *IEEE Transactions on Parallel and Distributed Systems,* Juillet 2003, vol. 14 (7
- **N.VENTOUX.** Contrôle en ligne des systèmes multiprocesseurs hétérogènes embarqués - élaboration et validation d'une architecture. Université de Rennes, 19 Septembre 2006, 1
- **S. IRANI.** Online Stratégies for Dynamic Power Management in Systems with Multiple Power-Saving States. *ACM Transactions on Embedded Computing Systems,* Août 2003, vol. 2 (3), 325-346